## Europäisches Patentamt
## European Patent Office
## Office européen des brevets

(11) Veröffentlichungsnummer: **0 111 194**
**B1**

(12) **EUROPÄISCHE PATENTSCHRIFT**

(45) Veröffentlichungstag der Patentschrift:
20.05.87

(51) Int. Cl.⁴: **G 01 P 3/36**

(21) Anmeldenummer: **83111582.9**

(22) Anmeldetag: **19.11.83**

(54) Einrichtung zur Messung der Rotationsgeschwindigkeit.

(30) Priorität: **03.12.82 DE 3244713**

(43) Veröffentlichungstag der Anmeldung:
**20.06.84 Patentblatt 84/25**

(45) Bekanntmachung des Hinweises auf die Patenterteilung:
**20.05.87 Patentblatt 87/21**

(84) Benannte Vertragsstaaten:
**DE FR GB**

(56) Entgegenhaltungen:
**DE-A-3 104 786**

**PATENTS ABSTRACTS OF JAPAN, Band 7, Nr. 253 (P-235) 1398 , 10. November 1983**

(73) Patentinhaber: **International Standard Electric Corporation, 320 Park Avenue, New York New York 10022 (US)**

(84) Benannte Vertragsstaaten: **FR GB**

(73) Patentinhaber: **Standard Elektrik Lorenz Aktiengesellschaft, Hellmuth- Hirth- Strasse 42, D-7000 Stuttgart 40 (DE)**

(84) Benannte Vertragsstaaten: **DE**

(72) Erfinder: **Mohr, Friedemann, Keltenstrasse 28, D-7253 Renningen (DE)**

(74) Vertreter: **Schmidt, Werner, Dipl.- Phys., c/o Standard Elektrik Lorenz AG Patent- und Lizenzwesen Kurze Strasse 8 Postfach 300 929, D-7000 Stuttgart 30 (DE)**

LIBER, STOCKHOLM 1987

## Beschreibung

Die Erfindung geht aus von einer Einrichtung zur Messung der Rotationsgeschwindigkeit wie im Oberbegriff des Anspruchs 1 angegeben. Eine solche Einrichtung ist in der DE-A- 31 36 688 (Offenlegungstag: 31.03.83) bzw. in der entsprechenden EP-A- 0 074 609 (Prioritätstag: 16.09.81, Veröffentlichungstag: 23.03.83) beschrieben.

Bei der dort beschriebenen Einrichtung wird ein Lichtstrahl in zwei Teilstrahlen aufgeteilt und diese durchlaufen einen Lichtwellenleiter, der einen geschlossenen Lichtweg bildet, gegensinnig. Um eine gute Meßgenauigkeit zu erreichen, ist es einerseits wunschenswert, den optisch/elektrischen Handler an der Stelle seiner Kennlinie zu betreiben, an der eine kleine Änderung der Intensitat des Lichts, das auf ihn gerichtet wird, eine starke Anderung seines elektrischen Ausgangssignals bewirkt. Andererseits ist es wünschenswert, zur Auswertung ein Wechselspannungssignal zur Verfügung zu haben Beides erreicht man, wenn man die beiden Teilstrahlen geeignet moduliert. Dies sei an einem Beispiel erläutert: man verwendet als Modulatoren Bragg-Zellen, die jeweils vor einem Ende eines Lichtwellenleiters angeordnet sind, und ändert die Frequenz ihrer Ansteuersignale periodisch. Die hodulationsfrequenz ist die Frequenz, mit der zwischen den unterschiedlichen Frequenzen des Ansteuersignals umgeschaltet wird. Die Phasenverschiebung zwischen den beiden Teilstrahlen des Lichtwellenleiters hängt von der Frequenz der Ansteuersignale für die beiden Bragg-Zellen ab. Man wählt nun diese Frequenzen so, daß die Phasendifferenzen zwischen den beiden Teilstrahlen $(2v+1) \cdot \frac{\pi}{2}$ oder $(2v+3) \cdot \frac{\pi}{2}$ ist, wobei $v$ eine beliebige positive oder negative ganze Zahl sein kann. Die Frequenzen der Ansteuersignale werden mit der Modulationsfrequenz $f_S$ so verändert, daß periodisch die eine oder die andere Phasendifferenz erzeugt wird.

Ist die Meßeinrichtung in Ruhe, dann ist das Ausgangssignal des optisch/elektrischen Wandlers, dem die beiden Teilstrahlen nach dem Durchlaufen des Lichtwellenleiters zugeführt werden, bei beiden Phasendifferenzen zwischen den Teilstrahlen gleich. Dreht sich die Meßeinrichtung, dann addiert sich zu der oben genannten Phasendifferenz die durch den Sagnac-Effekt verursachte Phasendifferenz und am Ausgang des optisch/elektrischen Wandlers erhält man ein Wechselspannungssignal mit der Frequenz $f_S$ des Modulationssignals. Durch Regeln der Frequenzen von einem oder von beiden Ansteuersignalen erzeugt man zwischen den beiden Teilstrahlen eine zusätzliche Phasendifferenz, die so gewählt ist, daß die Sagnac-Phasendifferenz kompensiert wird, d. h. man erhält wieder die Phasendifferenzen $(2v+1) \cdot \frac{\pi}{2}$ bzw. $(2v+3) \cdot \frac{\pi}{2}$. Aus dem Regelsignal wird die Rotationsgeschwindigkeit $\Omega$ ermittelt.

Erfolgt die Kompensation der Sagnac-Phasendifferenz $\varphi_S$ bei großen Werten für $v$, enthält die Gleichung, aus der die Rotationsgeschwindigkeit $\Omega$ ermittelt wird, einen großen additiven Term, der von $v$ abhangt. Die in diesem Term enthaltenen Großen (Länge und Brechungsindex des Lichtwellenleiters) konnen driften und sind somit Ursache für Meßfehler.

Deshalb ist bei der bekannten Einrichtung vorgesehen, in bestimmten Zeitabstanden Eichungen durchzufuhren. Für die Eichung werden die Frequenzen der Ansteuersignale für die Bragg-Zellen so gewählt, daß zwischen den beiden Teilstrahlen nach dem Durchlaufen des Lichtwellenleiters eine Phasendifferenz von $2\pi$ oder ganzzahligen Vielfachen gebildet wird.

Aufgabe der Erfindung ist es, eine Einrichtung zur Messung der Rotationsgeschwindigkeit anzugeben, bei der die Eichung kontinuierlich erfolgt.

Die Lösung dieser Aufgabe erfolgt mit den im Anspruch 1 angegebenen Mitteln. Vorteilhafte Weiterbildungen sind den abhängigen Ansprüchen zu entnehmen.

Bei der neuen Einrichtung wird eine Abweichung der in die Messung eingehenden Größen von ihren Soll-Werten sofort erfaßt und ausgeglichen. Dadurch erzielt man eine große Meßgenauigkeit. An die Frequenzstabilität der Einrichtungen, die die Ansteuersignale für die Modulatoren erzeugen, sind keine hohen Anforderungen zu stellen. Das Vorzeichen der Rotation kann einfach ermittelt werden.

Die Werte $v$ als Faktoren der erzeugten Phasendifferenzen können sehr groß gewählt werden. Dies ist von Vorteil, wenn als Modulatoren Bragg-Zellen verwendet werden. Dann sind nämlich die Nutzsignale von an Störstellen reflektierten oder aus der Faser rückgestreuten Signalen frequenzmäßig gut voneinander getrennt.

Die Erfindung wird anhand von Zeichnungen beispielsweise näher erläutert. Es zeigt:

Fig. 1 ein Blockschaltbild eines Teils einer bekannten Einrichtung zur Messung der Rotationsgeschwindigkeit,

Fig. 2 Ansteuersignale für die Modulatoren der bekannten (Fig. 2a, b) und der neuen (Fig. 2c, d) Einrichtung,

Fig. 3 Blockschaltbild für ein Ausfuhrungsbeispiel des Regelteils der neuen Einrichtung, und

Fig. 4 ein Blockschaltbild des Ausworteteils der neuen Einrichtung.

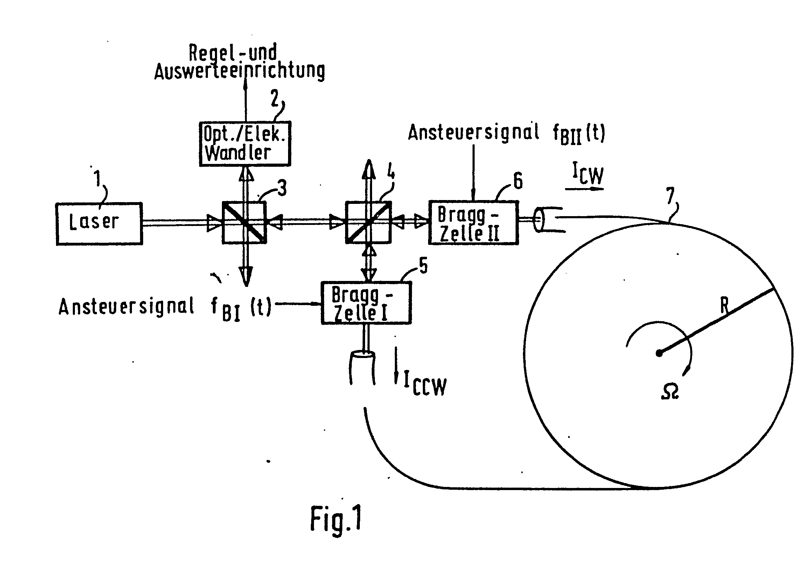

Anhand der Fig. 1 werden zunächst die zum Verständnis der neuen Meßeinrichtung wesentlichen Teile einer bekannten Einrichtung zur Messung der Rotationsgeschwindigkeit erläutert.

Ein von einem Laser 1 abgegebener Lichtstrahl wird einem Strahlteiler 3 zugeführt. Ein Teil des Lichtstrahls gelangt zu einem weiteren Strahlteiler 4; ein anderer wird zu einem micht dargestellten) Absorber geleitet. Der weitere Strahlreiler 4 erzeugt zwei Teilstrahlen, die einen spulenformig (Radius R) angeordneten Lichtwellenleiter 7 gegensinnig durchlaufen. Zwischen dem weiteren Strahlteiler 6 und den beiden Enden des Lichtwellenleiters ist jeweils eine Bragg-Zelle 5, 6 angeordnet. Die Bragg-Zellen erhalten Ansteuersignale mit den Frequenzen $f_{BI}(t)$ bzw. $f_{BII}(t)$. Die beiden Teilstrahlen werden von dem weiteren Strahlteiler 4 nach dem Durchlaufen des Lichtwellenleiters einander überlagert. Dieser Lichtstrahl gelangt zu dem ersten Strahlteiler 3, der einen Teil davon zu einem optisch/elektrischen Wandler 2, dem eine Regel- und Auswerteeinrichtung nachgeschaltet ist, leitet.

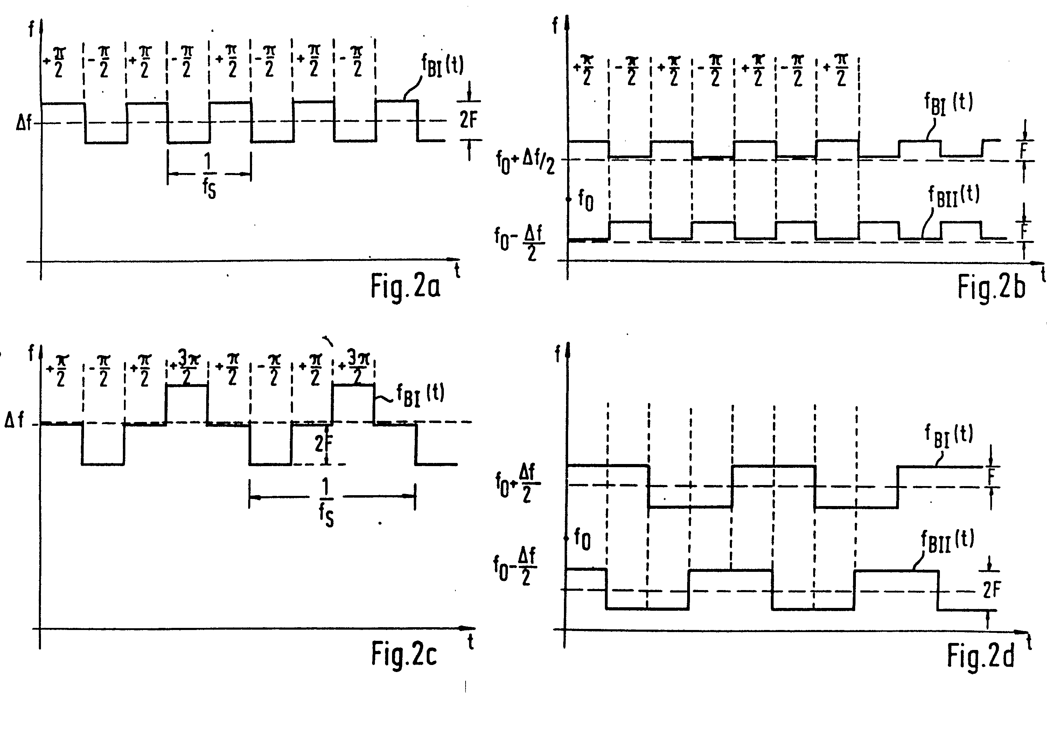

Bei einer Rotationsgeschwindigkeit $\Omega = 0$ ist das Ausgangssignal des optisch/elektrischen Wandlers 2 ein Gleichspannungssignal. Ist $\Omega \neq 0$, dann gibt der Wandler ein Wechselspannungssignal mit der Frequenz $f_S$ ab. $f_S$ ist die Frequenz, mit der bei den Ansteuersignalen von einer zur anderen Frequenz umgeschaltet wird. Dieses Wechselspannungssignal wird, wie anhand der Fig. 2 näher erläutert wird, zu null geregelt. Die Rotationsgeschwindigkeit wird aus dem Regelsignal ermittelt (beispielsweise mittels der Frequenzen der Ansteuersignale, deren Frequenzen vom Regelsignal gesteuert werden).

Wie bereits in der Beschreibungeinleitung erwähnt, wird bei der Regelung die durch den Sagnac-Effekt bedingte zusätzliche Phasendifferenz $\varphi_S$ kompensiert. Hierzu ist eine Frequenzdifferenz $\Delta f$ notwendig.

Das Ansteuersignal $f_{BI}(t)$ hat den in Fig. 2c dargestellten Verlauf, wenn bei der Anordnung nach Fig. 1 nur eine Bragg-Zelle vorhanden ist. Das Modulationssignal ist ein Signal, bei dem mit der Frequenz $f_S$ periodisch zwischen einem ersten und einem zweiten Frequenzwert (diese sind um die Frequenz 2F gestrennt) umgeschaltet wird. Beim ersten Frequenzwert wird zwischen den beiden Teilstrahlen eine Phasendifferenz von $(2\nu + 3) \cdot \frac{\pi}{2}$ und beim zweiten Frequenzwert eine Phasendifferenz von $(2\nu + 1) \cdot \frac{\pi}{2}$ erzeugt.

Bei dem in Fig. 2a dargestellten Beispiel ist zur Vereinfachung $\nu = -1$, d. h. es werden alternierend Phasendifferenzen von $+ \frac{\pi}{2}$ und $- \frac{\pi}{2}$ erzeugt. Bei $\Omega = 0$ ist die mittlere Frequenz $f_0$ (bei den hier gewählten Phasendifferenzen ist $f_0 = 0$). Bei einer Rotation wird die mittlere Frequenz zu $f_0 + \Delta f$ verschoben, hier also zu $\Delta f$.

Sind, wie in Fig. 1 dargestellt, zwei Bragg-Zellen vorhanden, dann benötigt man zwei Modulationssignale $f_{BI}(t)$ und $f_{BII}(t)$. Die beiden Modulationssignale sind um eine halbe Periodendauer gegeneinander verschoben. Während der Zeit, während der die Frequenz des einen Modulationssignals $f_{BI}(t)$ größer als $f_0 + \frac{\Delta f}{2}$ ist, ist die Frequenz des anderen Modulationssignals $f_{BII}(t)$ gleich $f_0 - \frac{\Delta f}{2}$. Während der zweiten Hälfte einer Periode gilt dies sinngemaß umgekehrt. Bei $\Omega = 0$ ist $\Delta f = 0$, d. h. die Mittenfrequenzen fur beide Modulationssignale sind gleich. Bei $\Omega \neq 0$, d. h.

$\Delta f \neq 0$, wird die Mittenfrequenz des ersten Modulationssignals $f_0 + \frac{\Delta f}{2}$ und die des zweiten $f_0 - \frac{\Delta f}{2}$. Die Frequenzsprunge innerhalb eines Modulationssignals sind jetzt nicht mehr wie beim (einzigen) Modulationssignal gemäß Fig. 2a 2F sondern nur noch jeweils F.

Nachfolgend wird erläutert, wie die bekannte Einrichtung abgeändert werden muß, damit eine kontinuierliche Eichung möglich ist.

Die neue Einrichtung kann, wie die bekannte Einrichtung, mit einer oder mit zwei Bragg-Zellen realisiert werden. Es muß lediglich wiederum dafür gesorgt werden, daß die erforderlichen Phasendifferenzen zwischen den beiden Teilstrahlen nach dem Durchlaufen des Lichtwellenleiters vorhanden sind.

Bei der neuen Einrichtung werden nacheinander die folgenden Phasendifferenzen erzeugt

1. $(2\nu + 1) \cdot \frac{\pi}{2}$
2. $(2\nu + 3) \cdot \frac{\pi}{2}$
3. $(2\nu + 5) \cdot \frac{\pi}{2}$
4. $(2\nu + 3) \cdot \frac{\pi}{2}$

Diese Folge stellt eine Periode dar. $\nu$ ist eine beliebig wählbare positive oder negative ganze Zahl. Bei den in den Figuren 2c und 2d dargestellten Ansteuersignalen ist $\nu = -1$. Somit ergeben sich die Phasendifferenzen $- \frac{\pi}{2}, + \frac{\pi}{2}, + \frac{3\pi}{2}, + \frac{\pi}{2}$, wenn, wie be Fig. 2a, zur Vereinfachung $f_0 = 0$ gewählt wird. Entsprechend diesem treppenförmigen Verlauf der zu erzeugenden Phasendifferenzen werden die Frequenzen des Modulationssignals treppenförmig und zwar jeweils um Sprunge von 2F geändert. Verwendet man zwei Bragg-Zellen, dann sind wieder, entsprechend Fig. 2b, zwei Modulationssignale $f_{BI}(t)$ und $f_{BII}(t)$ notwendig. Beide Modulationssignale weisen einen sich rechteckförmig ändernden Frequenzverlauf auf. Die beiden Modulationssignale sind um eine viertel Periode gegeneinander verschoben. Das eine Modulationssignal hat die Frequenzen $f_0 + \frac{\Delta f}{2} + F$ und $f_0 + \frac{\Delta f}{2} - F$; das andere die Frequenzen $f_0 - \frac{\Delta f}{2} + F$ und $f_0 - \frac{\Delta f}{2} - F$. Hierdurch sind zwischen den Modulationssignalen in den vier Teilen einer Periode Frequenzdifferenzen von $\Delta f$, $\Delta f + 2F$, $\Delta f$ und $\Delta f - 2F$ vorhanden, wodurch die Phasendifferenzen $- \frac{\pi}{2}, + \frac{\pi}{2}, + \frac{3\pi}{2}$ und $\frac{\pi}{2}$ erzeugt werden.

Sind also zwei Bragg-Zellen vorhanden, dann erhält man diese Phasendifferenzen auf einfache Weise dadurch, daß man die Bragg-Zellen mit jeweils einem Ansteuersignal, dessen Frequenzverlauf eine Rechteckkurve darstellt, ansteuert.

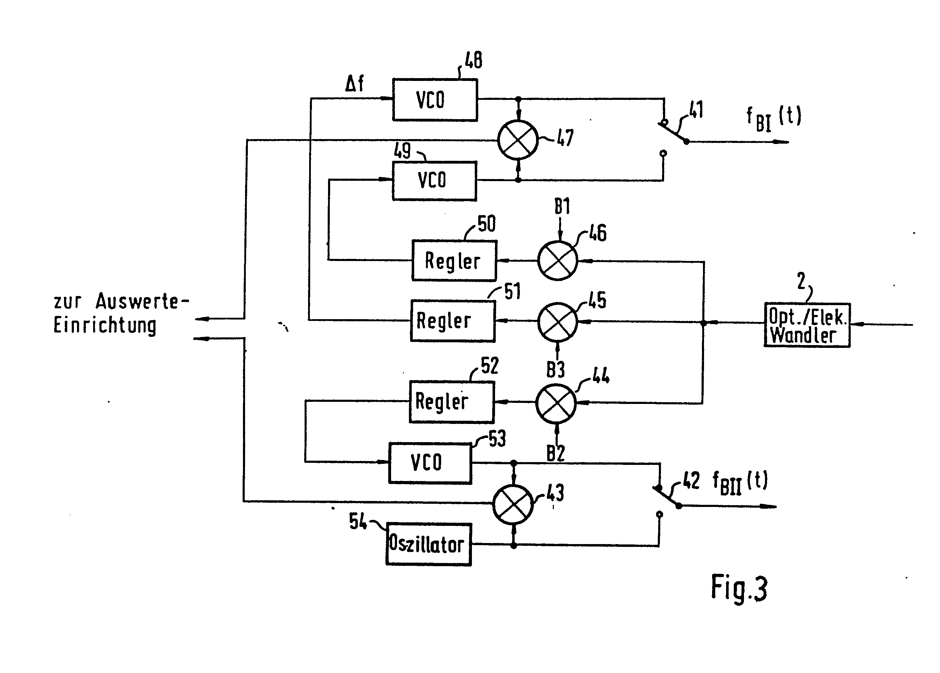

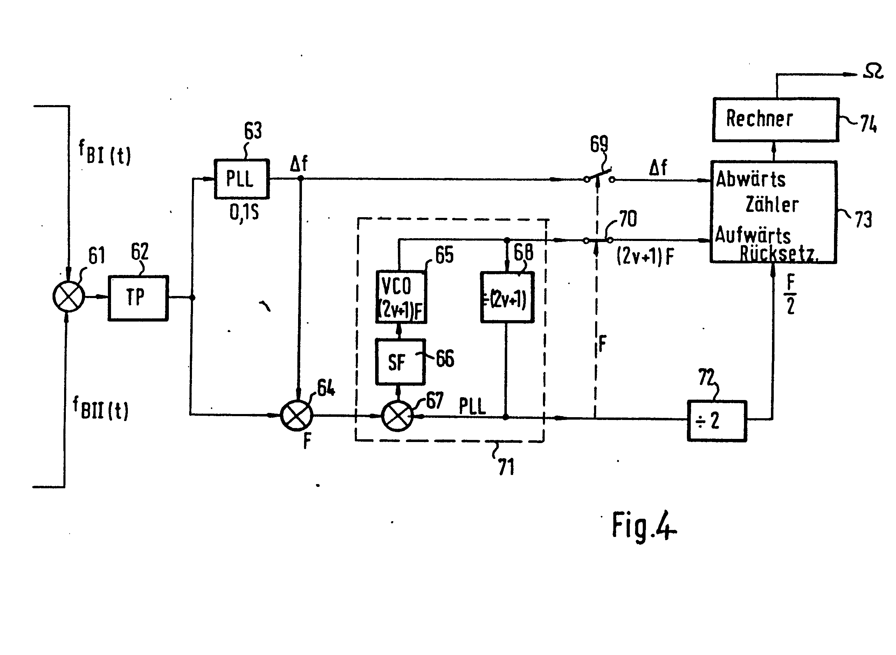

Bei der bekannten Einrichtung, hei der Phasendifferenzen von $+ \frac{\pi}{2}$ und $- \frac{\pi}{2}$ erzeugt werden, erhält man am Ausgang des optisch/elektrischen Wandlers 2 ein auszuregelndes Signal, das die Frequenz $f_S$ hat. Die Frequenz $f_S$ ist diejenige Frequenz, mit der sich die Phasendifferenzen zwischen den Teilstrahlen, bedingt durch die Modulation in den Bragg-Zellen/ändert. Bei der neuen Einrichtung gibt der Wandler ein Signal ab, das drei voneinander zu trennende Signalanteile enthält. Die Trennung dieser Signale und die weitere Signalverarbeitung wird nachfolgend anhand der Fig. 3 und 4 erläutert.

Die neue Einrichtung zur Messung der Rotationsgeschwindigkeit geht aus von der bekannten, anhand der Fig. 1 beschriebenen Einrichtung. Anhand der Fig. 3 und 4 wird erläutert, wie die Ansteuersignale für die Bragg-Zellen erzeugt werden.

In einem ersten, nicht dargestellten Ausführungsbeispiel sind, wie in der Fig. 1, die beiden Bragg-Zellen sowie der optisch/elektrische Wandler vorhanden. Der optisch/elektrische Wandler gibt ein Ausgangssignal ab, das drei phasenempfindlichen Gleichrichtern zugeführt wird. Diese phasenempfindlichen Gleichrichter trennen die drei Signalanteile, die, wie bereits erwähnt, im Ausgangssignal des Wandlers enthalten sind. Hierzu werden den drei phasenempfindlichen Gleichrichtern die als Lock-in- Verstärker mit Integrierverhalten realisiert sind, unterschiedliche Bezugssignale zugeführt, und zwar dem ersten Lock-in-Verstärker ein rechteckförmiges Bezugssignal B1, das aus einem Signal $\sin \omega t$ abgeleitet wird, dem zweiten Lock-in-Verstärker ein rechteckförmiges Bezugssignal B2, das aus einem Signal $\cos \omega t$ abgeleitet wird, und dem dritten Lock-in-Verstärker ein rechteckförmiges Bezugssignal B3, das aus einem Signal $\sin 2\omega t$ abgeleitet wird. Die Bezugssignale sind zueinander synchron und werden von einer signalerzeugungs Einrichtung abgegeben. Die Frequenz ist ein beliebiger Wert im kHz-Bereich, der vorzugsweise gleich einem ganzzahligen Bruchteil des Kehrwerts der Laufzeit des Lichtstrahls im Lichtwellenleiter ist.

Weiterhin wird in einem ersten Multiplizierer das von $\sin \omega t$ abgeleitet Bezugssignal B1 mit dem Ausgangssignal des zweiten Lock-in-Verstärkers und in einem zweiten Multiplizierer das von $\cos \omega t$ abgeleitete Bezugssignal B2 mit dem Ausgangssignal des ersten Lock-in-Verstärkers multipliziert. Das Ausgangssignal des ersten Multiplizierers wird einer ersten Addierstufe und das Ausgangssignal des zweiten Multiplizierers wird einer zweiten Addierstufe zugeführt. Beide Addierstufen erhalten jeweils das Ausgangssignal des dritten Lock-in-Verstärkers als zweites Eingangssignal. Die Addierstufen sind in an sich bekannter Weise mit geeignet beschalteten Differenzverstärkern realisiert. Das Ausgangssignal der ersten Addierstufe, das einen rechteckförmigen Verlauf hat, steuert einen spannungsgesteuerten Oszillator, der das Ansteuersignal $f_{BI}(t)$ für die erste Bragg-Zelle erzeugt, und das rechteckförmige Ausgangssignal der zweiten Addierstufe steuert einen weiteren spannungsgesteuerten Oszillator, der das Ansteuersignal $f_{BII}(t)$ für die zweite Bragg-Zelle erzeugt.

Diese Einrichtung stellt eine Regeleinrichtung mit drei verkoppelten Regelschleifen dar. Im eingeschwungenen Zustand sind die Eingangssignale für die Lock-in-Verstärker gleich null. Die ansteuersignale $f_{BI}(t)$ und $f_{BII}(t)$ haben dann den in Fig. 2d dargestellten Verlauf. Bei der Regelung der spannungsgesteuerten Oszillatoren wird der Wert 2F, um den die Frequenzen der spannungsgesteuerten Oszillatoren springen, sowie die mittlere Frequenzdifferenz $\Delta f$ zwischen beiden VCO-Ausgangsfrequenzen, geregelt.

Durch diese Regelung wird erreicht, daß die durch den Sagnac-Effekt bedingte Phasendifferenz $\varphi_S$ kompensiert wird. Hierzu werden die Mittenfrequenzen der spannungsgesteuerten Oszillatoren von ihrem ursprünglichen Wert $f_0$ zu Werten $f_0 + \frac{\Delta f}{2}$ und $f_0 - \frac{\Delta f}{2}$ verschoben. Die Frequenzen der Ansteuersignale springen um diese neuen Mittelwerte um $\pm$ F, d. h. jedes Ansteuersignal weist Frequenzsprunge von 2F auf.

Diese Frequenzsprunge 2F werden so geregelt, daß Schwankungen (z. B. der Lange L des Lichtwellenleiters oder des Brechungsindex n) kompensiert werden.

Anstelle der Lock-in-Verstärker können auch Mischer, denen jeweils Regler mit einem I-Anteil nachgeschaltet sind, verwendet werden.

Diese Lösung ist bei dem Ausfuhrungsbeispiel gemäß Fig.3 angenommen. Dieses Ausführungsheispiel unterscheidet sich von dem oben beschriebenen weiterhin dadurch, daß zur Erzeugung der Ansteuersignale $f_{BI}(t)$ und $f_{BII}(t)$ jeweils zwei Oszillatoren 48, 49 und 53, 54 vorgesehen sind. Der Oszillator 54 wird nicht geregelt. Die ührigen Oszillatoren sind spannungsgesteuerte Oszillatoren, deren Schwingungsfrequenzen analog zu dem oben beschriebenen Ausführungsbeispiel geregelt werden.

Es sind Schalter 41, 42 vorgesehen, die jeweils mit der Frequenz $\frac{1}{2} f_S$ gesteuert werden. Diese Schalter leiten jeweils das Ausgangssignal des einen oder das anderen Oszillators eines Oszillatorpaares zu der jeweiligen Bragg-Zelle weiter. Durch das Umschalten erhält man den gewünschten rechteckförmigen Frequenzverlauf für die Ansteuersignale.

Bei diesem Ausführungsbeispiel wird die Frequenz des spannungsgesteuerten Oszillators 48 so geregelt, daß die Sagnac-Phasendifferenz $\varphi_S$ kompensiert wird. Die Frequenz des zweiten spannungsgesteuerten Oszillators 49 dieses Oszillatorpaares wird so geregelt, daß die beiden Ausgangssignale einen solchen Frequenzsprung 2F aufweisen, daß die erwahnten Schwankungen kompensiert sind. Die beiden Ausgangssignale der Oszillatoren 48, 49 werden nicht nur dem Schalter 41 sondern außerdem auch einem Mischer 47 zugefuhrt.

Für das Oszillatorpaar 54 und 53 gilt entsprechendes. Die Frequenz des spannungsgesteuerten Oszillators 53 wird so geregelt, daß der gewünschte Frequenzsprung 2F zwischen den Ausgangssignalen der beiden Oszillatoren vorhanden ist. Die Ausgangssignale der beiden Oszillatoren werden außer zu dem Schalter 42 noch zu einem Mischer 43 geleitet. Aus den Mischerausgangssignalen wird die Rotationsgeschwindigkeit $\Omega$ ermittelt.

Anstelle der erläuterten Möglichkeiten zur Erzeugung der Ansteuersignale gibt es noch weitere Lösungen. Nachfolgend eine Aufstellung einiger Realisierungsmöglichkeiten:

a) die gewünschten Phasendifferenzen werden mittels eines Ansteuersignals erzeugt. Sein Frequenzverlauf ist treppenförmig mit einer Sprungweite von 2F. Seine Mittenfrequenz ist $f_0$ und gegebenenfalls zur Kompensation der Sagnac-Phasendifferenz $\varphi_S$ um $\Delta f$ frequenzverschoben.

b) die gewünschten Phasendifferenzen werden mittels zweier Ansteuersignale erzeugt

b1) zwei Oszillatoren erzeugen jeweils ein Ansteuersignal mit einem rechteckförmigen Frequenzverlauf, die Sprungweite ist jeweils 2F. Die beiden Signale sind um eine viertel Periode gegeneinander phasenverschoben

- die Mittenfrequenz der beiden Ansteuersignale ist $f_0$. Diese Frequenz ist gegebenenfalls für die beiden Signale um + bzw. - $\Delta f/2$ verschoben

- die Mittenfrequenz der beiden Ansteuersignale ist $f_0$. Die Frequenz eines Ansteuersignals ist gegebenenfalls um $\Delta f$ verschoben.

b2) vier Oszillatoren erzeugen jeweils ein Signal mit einer (geregelten) konstanten Frequenz. Zwei Oszillatoren bilden jeweils ein Paar und die beiden Signale eines Paares werden jeweils zu einem Schalter geführt, der das eine oder andere Signal als Teil des Ansteuersignals weiterleitet. Dadurch werden zwei Ansteuersignale mit einem rechteckförmigen Frequenzverlauf erzeugt.

- für die jeweiligen Frequenzverschiebungen gilt das oben Gesagte.

Bei der neuen Einrichtung erfolgt also eine Regelung, bei der zur Kompensation der Sagnac-Phasendifferenz $\varphi_S$ eine Frequenzverschiebung um $\Delta f$ erzeugt wird und eine Regelung, bei der die Frequenzsprünge um 2F des bzw. der Ansteuersignale so geregelt werden, daß die erwähnten Schwankungen kompesiert werden. Um die Regelungen zu ermöglichen, müssen die bereits erwähnten Phasendifferenzen $(2v + 1) \cdot \frac{\pi}{2}$, $(2v + 3) \cdot \frac{\pi}{2}$ und $(2v + 5) \cdot \frac{\pi}{2}$ erzeugt werden.

Im eingeregelten Zustand schließlich wird bei allen Ausführungsbeispielen die Rotationsgeschwindigkeit gemäß der Gleichung

$$\Omega = \frac{\lambda C}{8RL} \cdot \frac{(2v + 1) \, F - \Delta f}{F}$$

oder aus einer daraus abgeleiteten Gleichung ermittelt, z.B. in einem Rechner.

Hierbei sind

$\lambda$: Vakuumlichtwellenlänge

C: Vakuumlichtgeschwindigkeit

R: Radius des spulenförmig angeordneten Lichtwellenleiters

L: Länge des Lichtwegs

Die Größen des ersten Ausdrucks sind Konstanten. Eventuelle Abweichungen sind in F enthalten. v ist ebenfalls eine bekannte Größe. Es sind also noch F und $\Delta f$ zu bestimmen. Diese beiden Größen können auf einfache Weise durch Mischen geeigneter Signale erhalten und danach gemessen werden.

Anhand der Fig. 4 wird eine Lösung zur Bestimmung von $\Omega$ angegeben. Hierbei wird davon ausgegangen, daß zwei Ansteuersignale $f_{BI}(t)$ und $f_{BII}(t)$ (Fig 2d) vorhanden sind.

Die beiden Ansteuersignale $f_{BI}(t)$ und $f_{BII}(t)$ werden einem Mischer 61, dem ein Tiefpaß 62 nachgeschaltet ist, zugeführt. Am Ausgang des Tiefpasses ist das Signal $(f_{BII}-f_{BI})(t)$ vorhanden, das einerseits einem weiteren Mischer 64 und andererseits einer Phasenregelschleife 63 zugeführt wird. Die Phasenregelschleife 63 weist eine so große Zeitkonstante (ca. 0,1) auf, daß sie schnellen Frequenzänderungen nicht mehr folgen kann und sie sich somit auf die Frequenz $\Delta f$ einregelt. Die obere Grenze der Zeitkonstanten ist Ladurch bestimmt, daß die Phasenregelschleife Änderungen der Rotationsgeschwindigkeit $\Omega$ folgen kann. Die Phasenregelschleife gibt also ein Signal mit der Frequenz $\Delta f$ ab. Dieses wird einerseits zu dem weiteren Mischer 64 und andererseits zu einem Schalter 69 geleitet.

Das Ausgangssignal des weiteren Mischers 64 wird einer weiteren Phasenregelschleife 71, die einen Mischer 67, ein Schleifenfilter 66, einen spannungsgesteuerten Oszillator 65 und einen Teiler 68 enthält, zugeführt. Das Eingangssignal für die weitere Phasenregelschleife hat die Frequenz F und synchronisiert den spannungsgesteuerten Oszillator 65, der auf die Mittenfrequenz $(2v + 1)$ F abgestimmt ist. Dessen Ausgangssignal wird einerseits dem Teiler 68 der Phasenregelschleife zugeführt. Der Teiler führt eine Teilung durch $(2v + 1)$ durch, so daß dessen Ausgangssignal, das dem Mischer 67 der zweiten Phasenregelschleife 71 zugeführt wird, wieder die Frequenz F hat.

Die beiden Phasenregelschleifen sind so realisiert, daß sie impulsformige Signale abgeben. Diese haben eine Impulsfolgefrequenz von $\Delta f$ bzw. $(2v + 1)$ F und werden über die Schalter 69 bzw. 70 einem Aufwärts/Abwärtszähler 73 zugeführt. Sie sind die Taktimpulse für diesen Zähler.

Das Ausgangssignal des Teilers 68 wird weiterhin dazu verwendet, die Schalter 69 und 70 zu steuern und den Zähler 73 zurückzusetzen. Das Zurücksetzen des Zählers 73 erfolgt mit der halben Impulsfolgefrequenz $(\frac{F}{2})$. Deshalb ist vor den Zähler ein Teiler 72 geschaltet.

Das Zählen geschieht wie folgt:

- der Zähler wird zurückgestellt; der Schalter 70 geschlossen, der Schalter 69 geöffnet.

Der Zähler zählt jetzt die Taktimpulse bis zum Zeitpunkt, zu dem die beiden Schalter 69, 70 in ihre jeweils andere Schaltstellung gebracht werden.

- beim nöchsten Impuls der vom Teiler 68 abgegebenen Impulsfolge wird der Schalter 70 geöffnet, der Schalter 69 geschlossen.

Der Zähler zählt jetzt - mit den Taktimpulsen $\Delta f$ - rückwärts, bis der nächste Impuls des Teilers 68 wiederum die Schalter 69, 70 umschaltet.

Der Zählerstand ist jetzt $\frac{(2v+1)F \cdot \Delta f}{F}$

Außerdem wird jetzt der Zähler auf null zurückgesetzt.

Der Zählerstand wird in einen Rechner 74 eingelesen und dort mit dem konstanten Faktor $\frac{\lambda C}{8RL}$ multipliziert.

Die so ermittelte Rotationsgeschwindigkeit $\Omega$ wird von (einer nicht dargestellten) Anzeigeeinrichtung angezeigt.

Ist bei der Auswerteeinrichtung nach Fig. 4 der Teiler 72 nicht vorhanden, dann erhält man anstelle der Rotationsgeschwindigkeit $\Omega$ den Drehwinkel.

## Patentansprüche

1. Einrichtung zur Messung der Rotationsgeschwindigkeit mit einer einen Lichtstrahl erzeugenden Einrichtung (1), bei der dieser Lichtstrahl in zwei Teilstrahlen ($I_{CW}$, $I_{CCW}$), die einen geschlossenen Lichtweg (7) gegensinnig durchlaufen, aufgeteilt ist, bei der zwischen den Teilstrahlen nach dem Durchlaufen des Lichtwegs (7) eine durch den Sagnac-Effekt bedingte und zur Rotationsgeschwindigkeit ($\Omega$) proportionale Phasendifferenz ($\varphi_S$) vorhanden ist, bei der die beiden Teilstrahlen nach dem Durchlaufen des Lichtwegs einander überlager werden und der durch die Überlagerung erzeugte Lichtsrahl einem optisch/elektrischen Wandler (2), dem eine Regel- und Auswerteeinrichtung nachgeschaltet ist, zugeführt ist, bei der mindestens ein Modulator (5, 6) vorgesehen ist, der mindestens einen Teilstrahl so moduliert, daß zwischen den beiden Teilstrahlen nach dem Durchlaufen des Lichtwegs periodisch unterschiedliche Phasendifferenzen vorhanden sind, wobei die Phasendifferenzen so gewählt sind, daß das Ausgangssignal des optisch/elektrischen Wandlers (2) bei den unterschiedlichen Phasendifferenzen gleiche Amplituden aufweist, wenn die Meßeinrichtung in Ruhe ist und bei der das Ansteuersignal für den Modulator so geregelt ist, daß das Ausgangssignal des optisch/elektrischen Wandlers auch dann noch eine konstante Amplitude aufweist, wenn eine Rotation vorhanden ist, dadurch gekennzeichnet, daß das Ansteuersignal für den Modulator (5) so gewählt ist, daß periodisch die Phasendifferenzen $(2v + 1)\frac{\pi}{2}$, $(2v +3)\frac{\pi}{2}$, $(2v +5)\frac{\pi}{2}$, $(2v +3)\frac{\pi}{2}$, wobei $v$ eine beliebige positive oder negative ganze Zahl ist, erzeugt werden, daß das Ansteuersignal Frequenzsprünge aufweist und daß die Rotationsgeschwindigkeit $\Omega$ aus der Gleichung $\Omega = \frac{\lambda C}{8RL} \cdot \frac{(2v +1)F \cdot \Delta f}{F}$ oder aus einer daraus ableitbaren Gleichung ermittelt wird, mit $\lambda$ = Vakuumwellenlange des Lichts, C = Lichtgeschwindigkeit, R = Radius des spulenförmig angeordneten Lichtwegs, L = Länge des Lichtwegs, 2F = Frequenz der Frequenzsprünge und $\Delta f$ gleich Frequenzverschiebung des Ansteuersignals, die notwendig ist, um die Sagnac-Phasendifferenz $\varphi_S$ zu kompensieren.

2. Einrichtung nach Anspruch 1, dadurch gekennzeichnet, daß das Ansteuersignal einen stufenförmigen Verlauf hat.

3. Einrichtung nach Anspruch 1, dadurch gekennzeichnet, daß zwei Modulatoren (5, 6) vorgesehen sind, die jeweils ein Ansteuersignal erhalten.

4. Einrichtung nach Anspruch 3, dadurch gekennzeichnet, daß die beiden Ansteuersignale jeweils rechteckförmige Signale sind, die um eine viertel Periodendauer gegeneinander phasenverschoben sind.

5. Einrichtung nach Anspruch 4, dadurch gekennzeichnet, daß die Frequenzdifferenz zwischen den heiden Ansteuersignalen einen treppenformigen Verlauf hat.

6. Einrichtung nach einem der Ansprüche 3 bis 5, dadurch gekennzeichnet, daß zur Kompensation der Sagnac-Phasendifferenz die Frequenz eines Ansteuersignas um $\Delta f$ verschoben ist.

7. Einrichtung nach einem der Anspruche 3 bis 5, dadurch gekennzeichnet, daß zur Kompensation der Sagnac-Phasendifferenz die Frequenzen beider Ansteuersignale um $\frac{\Delta f}{2}$ verschoben sind.

## Claims

1. Rotation rate measuring instrument comprising a device (1) producing a light beam which is split into two component beams ($I_{CW}$, $I_{CCW}$) which travel over a closed light path (7) in opposite directions, wherein, after the component beams have traversed the light path (7), a phase difference ($M_S$) caused by the Sagnac effect and proportional to the rotation rate ($\Omega$) exists between them, wherein the two component beams having traversed the light path are combined and the light beam produced by the combination is directed to an optical-to-electrical transducer (2) followed by a control and evaluating facility, wherein at least one modulator (5, 6) is provided which modulates at least one of the component beams in such a way that, after the two component beams have traversed the light path, periodically varying phase differences exist between them which are chosen so that the output signal of the optical-to-electrical transducer (2) has the same amplitudes at the varying phase differences when the measuring instrument is at rest, and wherein the drive signal for the modulator is so controlled that the output signal of the optical-to-electrical transducer still has a constant amplitude even in the presence of rotation, characterised in that the drive signal for the modulator (5) is chosen so as to periodically produce the phase differences $(2v +1) \frac{\pi}{2}$, $(2v +3) \frac{\pi}{2}$, $(2v +5) \frac{\pi}{2}$, and $(2v +3) \frac{\pi}{2}$, where $v$ is an arbitrary positive or negative integer, that the drive signal exhibits frequency jumps and that the rotation rate $\Omega$ is determined by the equation

$$\Omega = \frac{\lambda C}{8RL} \cdot \frac{(2v +1)F - \Delta f}{F}$$

or by an equation derivable therefrom, where $\lambda$ = vacuum wavelength of light, C = velocity of light, R = radius of the coiled light path, L = length of the light path, 2F = frequency of the frequency jumps and $\Delta f$ = drive signal frequency shift required to compensate for ths Sagnac phase difference $\varphi_S$.

2. An instrument as claimed in Claim 1, characterized in that the drive signal has a step-function waveform.

3. An instrument as claimed in Claim 1, characterised in that two modulators (5, 6) are provided to each of which a drive signal is applied.

4. An instrument as claimed in Claim 3, characterized in that the two drive signals are square-wave signals separated in phase by one quarter-cycle.

5. An instrument as claimed in Claim 4, characterized in that the frequency difference between the two drive signals has a staircase waveform.

6. An instrument as claimed in any one of Claims 3 to 5, characterized in that, to compensate for the Sagnac phase difference, the frequency of one of the drive signals is shifted by $\Delta f$.

7. An instrument as claimed in any one of Claims 3 to 5, characterized in that, to compensate for ths Sagnac phase difference, the frequencies of both drive signals are shifted by $\frac{\Delta f}{2}$

## Revendications

1. Appareil de mesure de vitesse de rotation comprenant un dispositif (1) produisant un faisceau lumineux, dans lequel ce faisceau lumineux est divisé en deux faisceaux partiels $(I_{CW}, I_{CCW})$ parcourant un trajet lumineux fermé dans des directions opposées, dans lequel apparaît, entre les faisceaux partiels, après qu'ils aient parcouru le trajet lumineux, une différence de phase $(\varphi_S)$ causée par l'effet Sagnac et proportionnelle à la vitesse de rotation $(\Omega)$, dans lequel les deux faisceaux partiels ayant parcouru le trajet lumineux sont combinés et le faisceau résultant de la combinaison est dirigé vers un transducteur optique-électrique (2) suivi par un dispositif de commande et d'évaluation, dans lequel au moins un modulateur (5, 6) est prévu, qui module au moins l'un des faisceaux partiels, de manière qu'apparaissent, entre les deux faisceaux partiels ayant parcouru le trajet lumineux, des différences de phase variant périodiquement, choisies de façon que le signal de sortie du transducteur optique-électrique (2) ait les mêmes amplitudes pour des différences de phase qui varient lorsque l'appareil de mesure est au repos, et dans lequel le signal de commande du modulateur est controlé de façon que le signal de sortie du transducteur optique électrique ait aussi une amplitude constante, même en présence d'une rotation, caractérisé en ce que le signal de commande du modulateur (5) est choisi de façon à produire périodiquement les différences de phases $(2v +1) \frac{\pi}{2}$, $(2v +3) \frac{\pi}{2}$, $(2v +5) \frac{\pi}{2}$ et $(2v +3) \frac{\pi}{2}$, dans lequelles $v$ est un nombre entier arbitrairement choisi, positif ou négatif, en ce que le signal de commande comporte des sauts de fréquence et en ce que la vitesse de rotation $\Omega$ est déterminée par l'équation

$$\Omega = \frac{\lambda C}{8RL} \cdot \frac{(2v + 1)F - \Delta f}{F}$$

ou par une équation pouvant être dérivée de celle-ci, dans laquelle $\lambda$, longueur d'onde de la lumière dans le vide, C = vitesse de la lumière, R = rayon du trajet lumineux enroulé, L = longueur du trajet lumineux, 2F = fréquence des sauts de fréquence et $\Delta f$ = déviation de fréquence du signal de commande requise pour compenser la différence de phase de l'effet Sagnac $\varphi_S$.

2. Appareil selon la revendication 1, caractérisé en ce que le signal de commande a une forme de fonction en escalier.

3. Appareil selon la revendication 1, caractérisé en ce que deux modulateurs (5, 6) sont prévus, un signal de commande étant appliqué à chacun d'eux.

4. Appareil selon la revendication 3, caractérisé en ce que les deux signaux de commande sont des signaux en onde carrée décalés en phase d'un quart de période.

5. Appareil selon la revendication 4, caractérisé en ce que la différence de fréquence entre les deux signaux de commande a une forme en escalier.

6. Appareil selon l'une quelconque des revendications 3 à 5, caractérisé en ce que, pour compenser la différence de phase due à l'effet Sagnac, la fréquence de l'un des signaux de commande est décalée de $\Delta f$.

7. Appareil selon l'une quelconque des revendications 3 à 5, caractérisé en ce que, pour compenser la différence de phase due à l'effet Sagnac, les fréquences des deux signaux de commande sont décalés de $\frac{\Delta f}{2}$.

Laser

Regel- und Auswerteeinrichtung

Opt./Elek. Wandler

Ansteuersignal $f_{BI}(t)$

Ansteuersignal $f_{BII}(t)$

$I_{CW}$

$I_{CCW}$

Bragg-Zelle I

Bragg-Zelle II

R

$\Omega$

Fig.1

Fig.2a

Fig.2b

Fig.2c

Fig.2d

011 194

Fig.3

Fig.4